# EUROPEAN PATENT APPLICATION

(11) **EP 4 838 566 A1**
(43) Date of publication of application: **11.11.2026**
(21) Application number: 26166037.7
(22) Date of filing: 19.03.2026
(51) Int. Cl.: H01M 4/13, H01M 10/04, H01M 10/0587, H01M 4/02

(54) **WOUND ELECTRODE ASSEMBLY AND SECONDARY BATTERY**

(30) Priority: 08.05.2025 JP 2025078136
(71) Applicant: Toyota Jidosha Kabushiki Kaisha, Toyota-shi, Aichi-ken 471-8571 (JP)
(72) Inventor: KAZAMA, Daichi, Toyota-shi, 471-8571 (JP); IKEDA, Takenori, Toyota-shi, 471-8571 (JP); KINTSU, Yusuke, Toyota-shi, 471-8571 (JP); UEDA, Masashi, Toyota-shi, 471-8571 (JP); KIDA, Tomohisa, Toyota-shi, 471-8571 (JP); MIKI, Nariaki, Toyota-shi, 471-8571 (JP); SATO, Tomohiro, Toyota-shi, 471-8571 (JP); HE, Yu, Toyota-shi, 471-8571 (JP)
(74) Representative: Kuhnen & Wacker Patent- und Rechtsanwaltsbüro PartG mbB

(57) **Abstract**

A wound electrode assembly includes: a current collector (11) having a first primary surface (11a) located on one end side of a direction of thickness of the current collector (11) and a second primary surface (11b) located on the other end side of the direction of thickness; a first electrode film (13) disposed on the first primary surface (11a); and a second electrode film (14) disposed on the second primary surface (11b), wherein the current collector (11) is wound in a manner that the first primary surface (11a) is facing inward and the second primary surface (11b) is facing outward, and the first electrode film (13) has a lower density than the second electrode film (14).

## Description

### CROSS REFERENCE TO RELATED APPLICATIONS

This nonprovisional application is based on Japanese Patent Application No. 2025-078136 filed on May 8, 2025 with the Japan Patent Office, the entire content of which is hereby incorporated by reference.

### BACKGROUND

### Field

The present disclosure relates to a wound electrode assembly and a secondary battery.

### Description of the Background Art

As a conventional spiral wound electrode assembly, Japanese Patent Laying-Open No. H11-144762 discloses an electrode in which an active material layer is disposed on opposing surfaces of a current collector. In the electrode, one surface of the current collector is a rough surface and the other surface of the current collector is a smooth surface smoother than the one surface, where the difference in roughness between the rough surface and the one surface is 1.5 or greater.

### SUMMARY

The use of current collectors each having an electrode film attached thereto is considered as electrodes constituting a wound electrode assembly. In the wound electrode assembly, the electrodes are wound in a manner that those on the innermost periphery side have smaller radii of curvature, thereby enhancing the capacity of a secondary battery. In such as case, however, the electrode assembly has a greater curvature on the innermost periphery side than the outermost periphery side, increasing a stress on the electrode films on the current collectors. Due to this, if there is no countermeasure, cracks may develop in the electrode films.

The present disclosure is made in view of such problems described above, and an object of the present disclosure is to provide a wound electrode assembly that can achieve reduced cracks in electrode films, and a secondary battery including the same.

A wound electrode assembly according to the present disclosure includes: a current collector having a first primary surface located on one end side of the current collector in a direction of thickness of the current collector and a second primary surface located on the other end side of the current collector in the direction of thickness; a first electrode film disposed on the first primary surface; and a second electrode film disposed on the second primary surface. The current collector is wound in a manner that the first primary surface is facing inward and the second primary surface is facing outward. The first region of the at least one electrode film has a higher density than the second region of the at least one electrode film.

In the wound electrode assembly, the first primary surface facing inward has a greater stress than the second primary surface facing outward. The density of the first electrode film disposed on the first primary surface whose stress is greater than the second primary surface facing outward is lower than the density of the second electrode film disposed on the second primary surface as with the configuration described above, thereby imparting flexibility to the wound electrode assembly. This can reduce cracks in the electrode film.

A secondary battery according to the present disclosure includes the wound electrode assembly and a housing case accommodating the wound electrode assembly.

According to the above configuration, a secondary battery including the wound electrode assembly that can achieve reduced cracks in the electrode film can be obtained.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic cross sectional view of a secondary battery according to an embodiment.
Fig. 2 is a schematic plan view of an expanded positive plate included in a wound electrode assembly according to the embodiment.
Fig. 3 is a schematic cross sectional view of the positive plate included in the wound electrode assembly according to the embodiment.
Fig. 4 is a schematic plan view of an expanded negative plate included in the wound electrode assembly according to the embodiment.
Fig. 5 is a schematic cross sectional view of the negative plate included in the wound electrode assembly according to the embodiment.

### DESCRIPTION OF THE PREFERRED EMBODIMENTS

Hereinafter, an embodiment according to the present disclosure will be described, with reference to the accompanying drawings. Note that the embodiment below uses the same reference signs to refer to the same or common parts, and description thereof will not be repeated.

### (Secondary Battery)

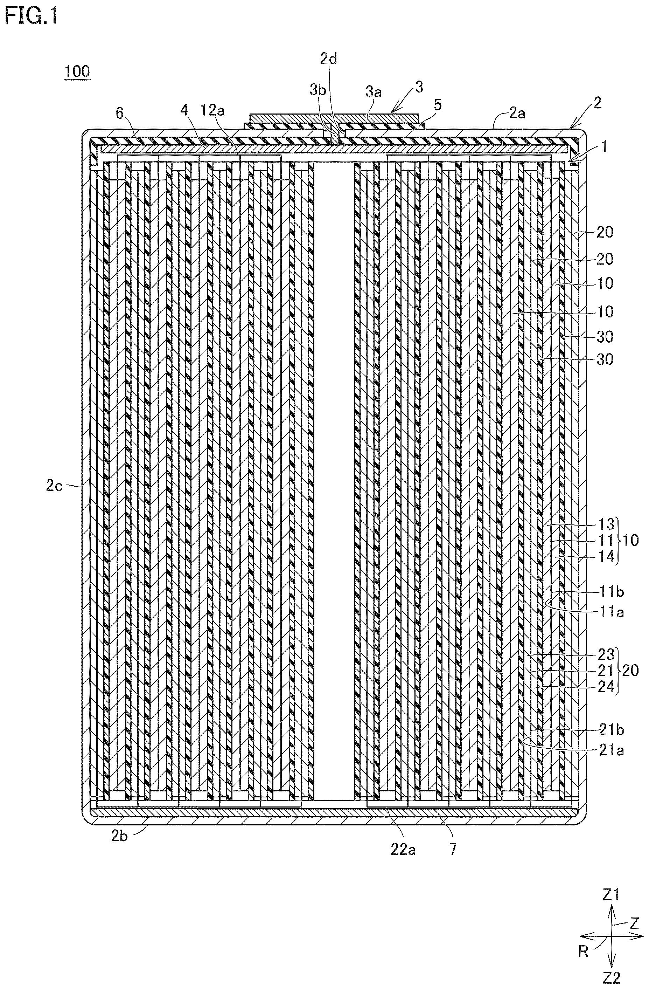

Fig. 1 is a schematic cross sectional view of a secondary battery according to the embodiment. Referring to Fig. 1, a secondary battery 100 according to the embodiment is now described.

Secondary battery 100 is, for example, a lithium-ion battery that is mounted on a vehicle. Note that the application and type of secondary battery 100 is not limited to the above example. Secondary battery 100 may use an electrolyte solution or may be free of the same.

Secondary battery 100 according to one embodiment of the present disclosure includes a wound electrode assembly 1, a case 2, a positive terminal 3, a positive current collector plate 4, an external gasket 5, an internal gasket 6, and a negative current collector plate 7.

Wound electrode assembly 1 is spirally wound. Wound electrode assembly 1 is accommodated in case 2. Case 2 has a cylindrical shape. In other others, secondary battery 100 is a cylindrical battery.

Wound electrode assembly 1 includes a positive plate 10, a negative plate 20, and a separator 30. Positive plate 10 and negative plate 20 may each be a dried electrode film, for example. Separator 30 is disposed between positive plate 10 and negative plate 20 in a radial direction R of wound electrode assembly 1. Separator 30 separates positive plate 10 and negative plate 20 from each other. Meanwhile, separator 30 is configured to allow ions (e.g., lithium-ions) to traverse between positive plate 10 (more specifically, a positive active material) and negative plate 20 (more specifically, a negative active material). Wound electrode assembly 1 is configured of a group of electrode plates, in which the positive plate 10 and negative plate 20 are wound together via separator 30.

Case 2 has an upper surface 2a, a lower surface 2b, and a circumferential surface 2c. Upper surface 2a is located on one side of the axial direction of the cylindrical shape of case 2. Upper surface 2a is located on one side Z1 of an axial direction Z of wound electrode assembly 1, as viewed from wound electrode assembly 1. Lower surface 2b is located on the other side Z2 of the axial direction of the cylindrical shape of case 2. Lower surface 2b is located on the other side of axial direction Z of wound electrode assembly 1, as viewed from wound electrode assembly 1. Circumferential surface 2c has a tubular outline. Circumferential surface 2c connects upper surface 2a and lower surface 2b. Case 2 is formed of copper or aluminum, for example.

Note that the case 2 accommodates an electrolyte solution (not shown) too. If wound electrode assembly 1 is an all-solid-state battery, on the other hand, the electrolyte solution can be omitted.

Case 2 has a height dimension (the dimension in axial direction Z) of, for example, 50 mm or greater, 60 mm or greater, 70 mm or greater, or 80 mm or greater. The greater the height dimension (the dimension in axial direction Z) of case 2, the greater the storage battery capacity of secondary battery 100. The height dimension (the dimension in axial direction Z) of case 2 is, for example, 150 mm or less, 100 mm or less, or 80 mm or less. The less the dimension in axial direction Z (the height dimension) of case 2, the lower the profile of a module accommodating the secondary batteries 100 can be.

Case 2 has a diameter dimension (the dimension in radial direction R) of for example, 15 mm or greater, 20 mm or greater, 25 mm or greater, 30 mm or greater, 40 mm or greater, 45 mm or greater, or 46 mm or greater. The greater the diameter dimension (the maximum dimension in radial direction R) of case 2, the greater the storage battery capacity of secondary battery 100. Case 2 has a diameter dimension (the dimension in radial direction R) of, for example, 100 mm or less, 75 mm or less, 50 mm or less, or 46 mm or less. The less the diameter dimension (the dimension in radial direction R) of case 2 has, the more densely the secondary batteries 100 can be disposed in the module.

Positive terminal 3 is located on one side Z1 of axial direction Z, relative to wound electrode assembly 1. Positive terminal 3 includes a disk portion 3a and a riveting portion 3b. Riveting portion 3b is connected to disk portion 3a. Riveting portion 3b extends from the center of disk portion 3a to the other side Z2 of axial direction Z. Note that the positive terminal 3 is formed of aluminum. Disk portion 3a is disposed on upper surface 2a of case 2. Upper surface 2a of case 2 has a through-hole 2d. Riveting portion 3b extends from disk portion 3a, external to case 2, into case 2 through through-hole 2d.

Positive current collector plate 4 is accommodated in case 2. Positive current collector plate 4 is located on one side Z1 of axial direction Z, relative to wound electrode assembly 1. Positive current collector plate 4 is welded to a mixture non-forming portion 12a of positive plate 10. This positively charges positive current collector plate 4. Positive current collector plate 4 is welded to the end of riveting portion 3b on the other side Z2 of axial direction Z. This positively charges positive terminal 3.

External gasket 5 is disposed between disk portion 3a of positive terminal 3 and upper surface 2a of case 2. This electrically insulates positive terminal 3 and case 2 from each other.

Internal gasket 6 is disposed between case 2 and positive current collector plate 4 in case 2. This electrically insulates case 2 and positive current collector plate 4 from each other. Note that the riveting portion 3b passes through internal gasket 6 and in contact with positive current collector plate 4.

Negative current collector plate 7 is accommodated in case 2. Negative current collector plate 7 is located on the other side Z2 of axial direction Z, relative to wound electrode assembly 1. Negative current collector plate 7 is welded to a mixture non-forming portion 22a of negative plate 20. This negatively charges negative current collector plate 7. Negative current collector plate 7 is in contact with case 2. Specifically, negative current collector plate 7 is in contact with lower surface 2b and circumferential surface 2c. This negatively charges case 2. Specifically, upper surface 2a is negatively charged.

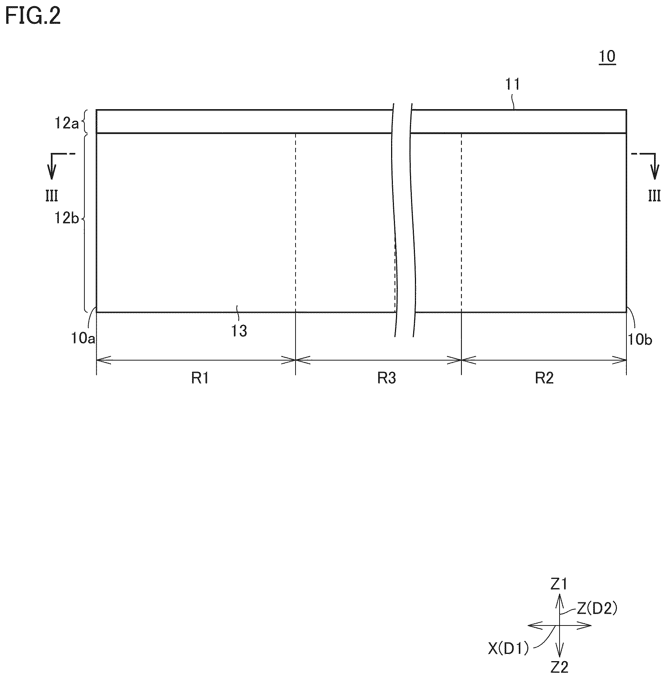

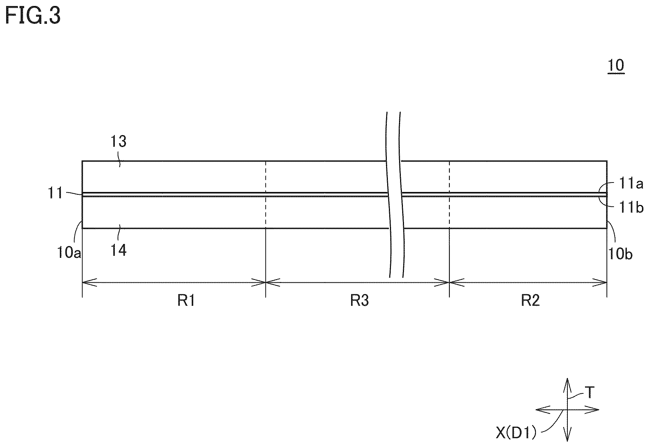

Fig. 2 is a schematic plan view of an expanded positive plate included in the wound electrode assembly according to the embodiment. Fig. 3 is a schematic cross sectional view of a positive plate included in the wound electrode assembly according to the embodiment. Note that Fig. 3 is a cross-sectional view taken along a III-III line shown in Fig. 2. Referring to Figs. 2 and 3, positive plate 10 according to the embodiment is now described.

Positive plate 10, when expanded, has a belt-like shape extending along a longitudinal direction D1. Longitudinal direction D1 is a direction in which a winding direction X is linearly expanded. Positive plate 10 has a first end 10a and a second end 10b in longitudinal direction D1. First end 10a is the end (the inner peripheral end of the winding) located on the inner peripheral side of wound electrode assembly 1. Second end 10b is the end (the outer peripheral end of the winding) located on the outer peripheral side of wound electrode assembly 1.

Positive plate 10 includes a positive current collector 11, a first cathode film 13, and a second cathode film 14. For example, positive current collector 11 is configured of a metallic foil such as aluminum. Positive current collector 11 has a first primary surface 11a and a second primary surface 11b that are aligned in a direction of thickness of positive current collector 11. In the state of wound electrode assembly 1, that is, when positive plate 10 is wound, first primary surface 11a faces the inner peripheral side of wound electrode assembly 1, and second primary surface 11b faces the outer peripheral side of wound electrode assembly 1.

Positive plate 10 has mixture non-forming portion 12a and a mixture forming portion 12b. In mixture non-forming portion 12a, positive current collector 11 is exposed from both first cathode film 13 and second cathode film 14. Mixture forming portion 12b is a portion of positive plate 10 on which both first cathode film 13 and second cathode film 14 are formed. Mixture non-forming portion 12a extends from mixture forming portion 12b to one side of a width direction D2 of positive plate 10. Note that the width direction D2 is parallel to axial direction Z of wound electrode assembly 1. Mixture non-forming portion 12a, being wound, is exposed from mixture forming portion 12b to the one side Z1 of axial direction Z of wound electrode assembly 1.

First cathode film 13 is disposed on first primary surface 11a. First cathode film 13 has a less density than second cathode film 14. First cathode film 13 is disposed on first primary surface 11a so that the end portion of the first primary surface 11a on the one side of width direction D2 orthogonal to longitudinal direction D1 is exposed.

Second cathode film 14 is disposed on second primary surface 11b. Second cathode film 14 is disposed on second primary surface 11b so that the end portion of the second primary surface 11b on the one side of width direction D2 orthogonal to longitudinal direction D1 is exposed. Second cathode film 14 is disposed overlapping the first cathode film 13 in a thickness direction T (see Fig. 3) of positive plate 10. Second cathode film 14 has approximately the same size as first cathode film 13.

Second cathode film 14 has a density 1.1 times or greater and 1.5 times or less than first cathode film 13.

First cathode film 13 and second cathode film 14 both have, in winding direction X, a first region R1 located on the first end 10a side of the inner peripheral side of the winding and a second region R2 located on the second end 10b side of the outer peripheral side of the winding.

First cathode film 13 and second cathode film 14 have, in longitudinal direction D1, first region R1 located on the first end 10a side, second region R2 located on the second end 10b side, and an intermediate region R3 located between first region R1 and second region R2. In other others, first cathode film 13 and second cathode film 14, being wound, have first region R1 located on the inner peripheral end side of the winding, second region R2 located on the outer peripheral end side of the winding, and intermediate region R3 located between first region R1 and second region R2.

First cathode film 13 and second cathode film 14 each have increasing densities in order from first region R1 to intermediate region R3 to second region R2.

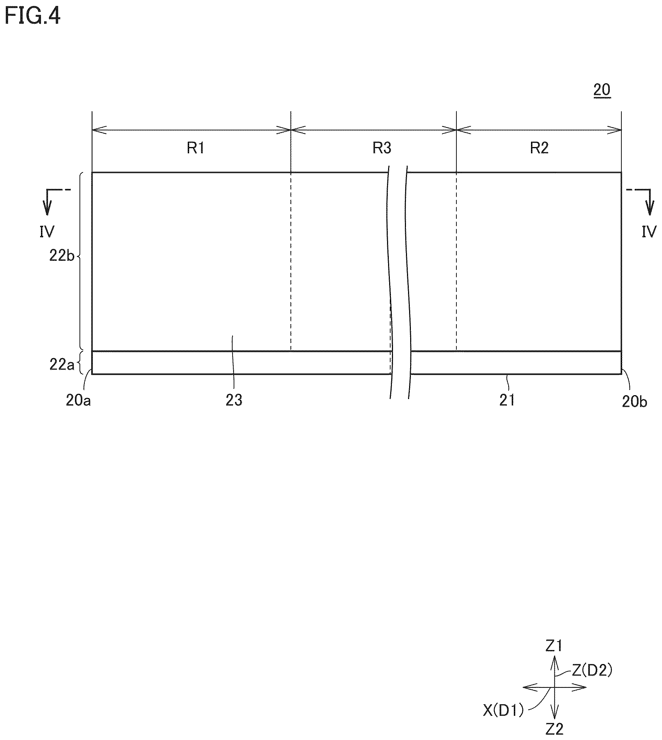

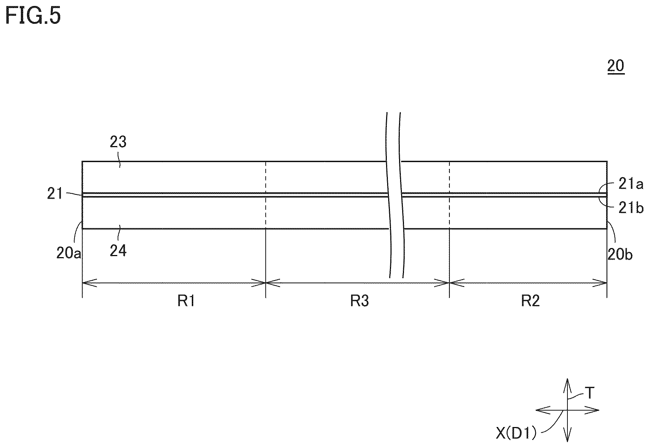

Fig. 4 is a schematic plan view of an expanded negative plate included in the wound electrode assembly according to the embodiment. Fig. 5 is a schematic cross sectional view of the negative plate included in the wound electrode assembly according to the embodiment. Referring to Figs. 4 and 5, negative plate 20 according to the embodiment is now described.

Negative plate 20, when expanded, has a belt-like shape extending along longitudinal direction D1. Negative plate 20 has a first end 20a and a second end 20b in longitudinal direction D1. First end 20a is the end (the inner peripheral end of the winding) located on the inner peripheral side of wound electrode assembly 1. Second end 20b is the end (the outer peripheral end of the winding) located on the outer peripheral side of wound electrode assembly 1.

Negative plate 20 includes a negative current collector 21, a first anode film 23, and a second anode film 24. For example, negative current collector 21 is configured of a metallic foil such as copper. Negative current collector 21 has a first primary surface 21a and a second primary surface 21b that are aligned in a thickness direction T of negative plate 20. In the state of wound electrode assembly 1, that is, when negative plate 20 is being wound, first primary surface 21a faces the inner peripheral side of wound electrode assembly 1, and second primary surface 21b faces the outer peripheral side of wound electrode assembly 1.

Negative plate 20 has mixture non-forming portion 22a and a mixture forming portion 22b. In mixture non-forming portion 22a, negative current collector 21 is exposed from both first anode film 23 and second anode film 24. Mixture forming portion 22b is a portion of negative plate 20 on which both first anode film 23 and second anode film 24 are formed. Mixture non-forming portion 22a extends from mixture forming portion 22b to the other side of width direction D2. Mixture non-forming portion 22a, being wound, is exposed from mixture forming portion 22b to the other side Z2 of axial direction Z of wound electrode assembly 1.

First anode film 23 is disposed on first primary surface 21a. First anode film 23 has a lower density than second anode film 24. First anode film 23 is disposed on first primary surface 21a so that the end portion of the first primary surface 21a on the other side of width direction D2 orthogonal to longitudinal direction D1 is exposed.

Second anode film 24 is disposed on second primary surface 21b. Second anode film 24 is disposed on second primary surface 21b so that the end portion of the second primary surface 21b on the other side of width direction D2 orthogonal to longitudinal direction D1 is exposed. Second anode film 24 is disposed overlapping the first anode film 23 in a thickness direction T of negative plate 20. Second anode film 24 has approximately the same size as first anode film 23.

Second anode film 24 has a density 1.1 times or greater and 1.5 times or less than first anode film 23.

First anode film 23 and second anode film 24 both have, in the winding direction, a first region R1 located on the first end 20a side of the inner peripheral side of the winding, and a second region R2 located on the second end 20b side of the outer peripheral side of the winding .

First anode film 23 and second anode film 24 have, in the longitudinal direction, first region R1 located on the first end 20a side, second region R2 located on the second end 20b side, and an intermediate region R3 located between first region R1 and second region R2. In other others, first anode film 23 and second anode film 24, being wound, have first region R1 located on the inner peripheral end side of the winding, second region R2 located on the outer peripheral end side of the winding, and intermediate region R3 located between first region R1 and second region R2.

First anode film 23 and second anode film 24 each have increasing densities in order from first region R1 to intermediate region R3 to second region R2.

Note that the positive plate 10 described above is formed by first cathode film 13 being affixed to first primary surface 11a of positive current collector 11 and second cathode film 14 being affixed to second primary surface 11b of positive current collector 11. First cathode film 13 is configured of a first cathode film. Second cathode film 14 is configured of a second cathode film.

For varying densities along the winding direction as described above, the first cathode film and the second cathode film each include multiple electrode films having different densities, each electrode film being affixed to a corresponding region.

A cathode film affixed to first region R1 has a lower density than a cathode film affixed to intermediate region R3 and a cathode film affixed to second region R2. The cathode film affixed to intermediate region R3 has a lower density than the cathode film affixed to second region R2.

The densities of the mixtures of the respective electrode films can be adjusted by, for example, changing conditions such as a press pressure during fabrication of the respective electrode films.

Similarly, negative plate 20 is formed by first anode film 23 being affixed to first primary surface 21a of negative current collector 21 and second anode film 24 being affixed to second primary surface 21b of negative current collector 21. First anode film 23 is configured of a first anode film. Second anode film 24 is configured of a second anode film.

For varying densities along the winding direction as described above, the first anode film and the second anode film each include multiple electrode films having different densities, each electrode film being affixed to a corresponding region.

A anode film affixed to first region R1 has a lower density than an anode film affixed to intermediate region R3 and a anode film affixed to second region R2. The anode film affixed to intermediate region R3 has a lower density than the anode film affixed to second region R2.

The densities of the mixtures of the respective electrode films can be adjusted by, for example, changing conditions such as a press pressure during fabrication of the respective electrode films.

In the above description, both first cathode film 13 and second cathode film 14 of the positive plate 10 side have densities increasing from the inner peripheral side of the winding toward the outer peripheral side of the winding. However, the present disclosure is not limited thereto. Insofar as first cathode film 13 has a lower density than second cathode film 14, the densities of the mixtures of each of first cathode film 13 and second cathode film 14 from the inner peripheral side of the winding to the outer peripheral side of the winding may be generally constant.

In this case, a single electrode film having a density that is generally constant in the winding direction is used as the first cathode film, and a single electrode film having a density that is generally constant in the winding direction is used as the second cathode film. The densities of the first cathode film and the second cathode film can be adjusted by, for example, changing conditions such as a press pressure during fabrication of the respective electrode films.

Similarly, both first anode film 23 and second anode film 24 of the negative plate 20 side have increasing densities from the inner peripheral side of the winding toward the outer peripheral side of the winding. However, the present disclosure is not limited thereto. Insofar as first anode film 23 has a lower density than second anode film 24, the density of each of first anode film 23 and second anode film 24 from the inner peripheral side of the winding to the outer peripheral side of the winding may be generally constant.

In this case also, a single electrode film having a density that is generally constant in the winding direction is used as the first anode film, and a single electrode film having a density that is generally constant in the winding direction is used as the second anode film. The densities of the first anode film and the second anode film can be adjusted by, for example, changing conditions such as a press pressure during fabrication of the respective electrode films.

### (Electrode Film)

The first cathode film and the second cathode film each may be configured of a free-standing film. Similarly, the first anode film and the second anode film each may be configured of a free-standing film.

The free-standing film represents a film that can maintain the film profile by its own, without a support. The free-standing film can have a strength that can withstand the roll conveyance or the like, without a support such as a current collector described below. The range of the tensile strength of the free-standing film may have only an upper or lower limit or have upper and lower limits by selecting any one numeric value or any two numeric values from a group consisting of 0.1 MPa, 0.2 MPa, 0.3 MPa, 0.5 MPa, 0.6 MPa, 0.7 MPa, 0.8 MPa, 0.9 MPa, and 1.0 MPa, for example. The range may or may not be inclusive of its endpoints. The range of the tensile strength of the free-standing film may be, for example, from 0.1 MPa to 1.0 MPa. The range of the tensile strength of the free-standing film may be, for example, 0.5 MPa or greater.

The free-standing film having the tensile strength of 0.5 MPa or greater is expected to facilitate, for example, web handling or the like.

The tensile strengths of the respective electrode films described above can be measured by the following method, for example. A test specimen is cut from an electrode film. The test specimen has a planar size of about 30 mm × 30 mm, for example. A tensile test is carried out on the test specimen at a speed of 2 mm/s by Texture Analyzer (e.g., manufactured by EKO INSTRUMENTS CO., LTD.). The maximum load during stretching of the test specimen is measured. The tensile strength is determined by the following equation. An arithmetic mean of three test specimens is employed as a tensile strength value. $Rm = \left(F\times 0.0098\right) / \left(t⋅W\right)$
Rm: Tensile Strength [MPa]
F: Maximum Load [g]
t: Thickness of Test Specimen [mm]
W: Width of Test Specimen [mm]

The electrode film can have any planner shape. The planner shape of the electrode film may be, for example, a belt-like shape, a rectangular shape, a round shape, etc. The dimensions (thickness, length, width, etc.) of the electrode film can be optionally modified, depending on an electrode design, for example. The range of thickness of the electrode film may have only an upper or lower limit or have upper and lower limits by selecting any one numeric value or any two numeric values from a group consisting of 5 µm, 10 µm, 25 µm, 50 µm, 75 µm, 100 µm, 150 µm, 200 µm, 250 µm, 300 µm, 400 µm, 500 µm, 600 µm, 700 µm, 800 µm, 900 µm, and 1000 µm, for example. The range may or may not be inclusive of its endpoints. The range of thickness of the electrode film may be, for example, from 5 µm to 1000 µm. The range of density of the electrode film may have only an upper or lower limit or have upper and lower limits by selecting any one numeric value or any two numeric values from a group consisting of 0.5 g/cm³, 1.0 g/cm³, 1.5 g/cm³, 2.0 g/cm³, 2.5 g/cm³, 3.0 g/cm³, 3.5 g/cm³, 4.0 g/cm³, 4.5 g/cm³, and 5.0 g/cm³, for example. The range may or may not be inclusive of its endpoints. The range of density of the electrode film may be, for example, from 0.5 g/cm³ to 5.0 g/cm³.

### (Compositions)

The electrode film includes an electrode active material and a first binder. The first binder includes a fibrous binder. In other others, the electrode film includes an electrode active material and a fibrous binder. The electrode film may further include, for example, a second binder, a conductive material, a solid electrolyte, etc. The electrode film may include, for example, 0.1% to 10% first binder, in mass fraction, 0 to 10% second binder, 0 to 10% conductive material, 0 to 30% solid electrolyte, and the remaining % electrode active material.

### (Electrode Active Material)

The electrode active material is a powder. For example, the electrode active material may exhibit a monomodal particle size distribution. The particle size distribution may be a volume distribution or a number distribution. The volume distribution can be measured by laser diffraction. The number distribution can be measured by microscopy. "D50" indicates the particle size achieving a cumulative frequency of 50% in a cumulative distribution. The range of D50 of the electrode active material may have only an upper or lower limit or have upper and lower limits by selecting any one numeric value or any two numeric values from a group consisting of 0.1 µm, 0.5 µm, 1 µm, 3 µm, 5 µm, 10 µm, 15 µm, 20 µm, 25 µm, and 30 µm, for example. The range may or may not be inclusive of its endpoints. For example, the range of D50 of the electrode active material may be from 0.1 µm to 30 µm.

For example, the electrode active material may exhibit a bimodal or multimodal particle size distribution. For example, if the particle size distribution (the frequency distribution) is bimodal, particles belonging to a peak having a larger particle size are "large particles." Particles belonging to a peak having a smaller particle size are "small particles." The mode diameter of each peak may be regarded as a particle size of each particle. The "mode diameter" indicates a particle size of a peak top of the frequency distribution. The range of "D_{L}/D_{S}," which is a ratio of the particle size "D_{L}" of larger particles to the particle size "D_{S}" of smaller particles, may have only an upper or lower limit or have upper and lower limits by selecting any one numeric value or any two numeric values from a group consisting of 1.2, 1.5, 2.0, 3.0, 4.0, and 5.0, for example. The range may or may not be inclusive of its endpoints. For example, a relationship such as "1.2 ≤ D_{L}/D_{S} ≤ 5.0" may be met.

The electrode active material may be primary particles or secondary particles. The electrode active material can have any particle shape. The particle shape may be, for example, a sphere shape, an ellipsoidal shape, a scale-like shape, a plate shape, a pillar shape, a massive shape, an unstructured shape, etc.

The electrode active material may be granules. The granules can be formed by any method. For example, granules may be formed by spray drying, stirring granulation, etc. The sphericity of the granules (the secondary particles) may be adjusted by granulation. The "sphericity" indicates circularity in an SEM image (a two-dimensional image). The sphericity (circularity) is determined by the following equation. An arithmetic mean of ten particles is employed as the sphericity. $ψ = 4 πS / {L}^{2}$
ψ: Sphericity (circularity)
π: Pi
S: Cross-sectional area of a particle (the area of a region surrounded by the particle contour)
L: Perimeter of Particles (the length of the particle contour)

The range of the sphericity "ψ" of the electrode active material may have only an upper or lower limit or have upper and lower limits by selecting any one numeric value or any two numeric values from a group consisting of 0.1, 0.2, 0.3, 0.4, 0.5, 0.6, 0.7, 0.8, 0.9, and 1.0, for example. The range may or may not be inclusive of its endpoints. For example, a relationship such as "0.1 ≤ ψ ≤ 1.0" may be met.

For the first anode film and the second anode film, a negative active material is used as the electrode active material. The negative active material may include, for example, at least one selected from a group consisting of natural graphite (scale-like graphite, spherical graphite), artificial graphite, soft carbon, hard carbon, silicon, silicon oxide, a silicon-based alloy, a silicon-carbon composite material "Si-C," lithium silicate, tin, tin oxide, a tin-based alloy, and lithium titanate. For example, the spherical graphite may be covered with amorphous carbon. For example, natural graphite, artificial graphite, soft carbon, and hard carbon can be, collectively, referred to as "a carbon-based active material." The silicon can include any crystalline phase. The silicon may include at least one selected from a group consisting of a clathrate I-type phase, a clathrate II-type phase, and a diamond phase, for example. Si-C indicates composite particles including carbon and at least one of silicon and silicon oxide. For example, silicon may be supported in internal voids in carbon particles. The carbon particles may be graphite particles or amorphous carbon particles. For example, silicon, silicon oxide, a silicon-based alloy, and a silicon-carbon composite material can be, collectively, referred to as "an Si-based active material."

The negative active material may be, for example, a mixture of natural graphite and artificial graphite. The mass ratio "Natural Graphite: Artificial Graphite" may be, for example, in a range whose endpoints are defined by any two sets selected from a group consisting of "1:9," "2:8," "3:7," "4:6," "5:5," "6:4," "7:3," "8:2," and "9:1." For example, a relationship such as a mass ratio "Natural Graphite: Artificial Graphite = 1:9 to 9:1" may be met.

The negative active material may be, for example, a mixture of a carbon-based active material and an Si-based active material. The mass ratio "Carbon-based Active Material: Si-based Active Material" may be, for example, in a range whose endpoints are defined by any two sets selected from a group consisting of "1:99," "5:95," "10:90," "20:80," "30:70," "40:60," "50:50," "60:40," "70:30," "80:20," "90:10," "95:5," and "99:1." For example, a relationship such as a mass ratio "Carbon-based Active Material: Si-based Active Material = 1:99 to 99:1" may be met.

For the first cathode film and the second cathode film, a positive active material is used as the electrode active material. The positive active material may include at least one selected from a group consisting of, for example, layered compounds, a rocksalt compound, a spinel compound, and an olivine-type compound. For example, the positive active material may be a mixture of the layered compounds and the olivine-type compound. The mass ratio "Layered Compounds: Olivine-type Compound" may be, for example, in a range whose endpoints are defined by any two sets selected from a group consisting of "1:9," "2:8," "3:7," "4:6," "5:5," "6:4," "7:3," "8:2," and "9:1." For example, a relationship such as a mass ratio "Layered Compounds: Olivine-type Compound = 1:9 to 9:1" may be met.

The positive active material may include at least one selected from a group consisting of, for example, Li[NiCoMn]O₂ (the layered compounds), Li[NiCoAl]O₂ (the layered compounds), LiMnO₂ (a rocksalt compound), Li[NiMn]₂O₄ (the spinel compound), and Li[MnFe]PO₄ (the olivine-type compound). Note that the recitation such as [NiCoMn] indicates that the sum of the ratios of the compositions in square brackets is 1. Insofar as the sum is 1, the respective components in square brackets can take any composition ratio. For example, the ratio of compositions of some components is allowed to be zero.

For example, the layered compounds may have a composition as given in general formula "LiₓNiₐCo_{b}M_{c}O_{y}," where the range of "x" may have only an upper or lower limit or have upper and lower limits by selecting any one numeric value or any two numeric values from a group consisting of 0.1, 0.2, 0.3, 0.4, 0.5, 0.6, 0.7, 0.8, 0.9, 1.0, 1.1, 1.2, 1.3, 1.4, and 1.5, for example. The range may or may not be inclusive of its endpoints. For example, a relationship such as "0.1 ≤ x ≤ 1.5" may be met. The relationship "a + b + c = 1" is met in the formula. Insofar as this relationship is met, the ranges of "a," "b," and "c" may, independently, have only an upper or lower limit or have upper and lower limits by selecting any one numeric value or any two numeric values from a group consisting of 0, 0.05, 0.1, 0.2, 0.3, 0.4, 0.5, 0.6, 0.7, 0.8, 0.9, and 1.0, for example. The range may or may not be inclusive of its endpoints. For example, relationships such as "0 ≤ a ≤ 1," "0 ≤ b ≤ 1," "0 ≤ c ≤ 1," etc. may be met. For example, relationships such as "0.5 ≤ a ≤ 0.9," "0.05 ≤ b ≤ 0.5," "0.05 ≤ c ≤ 0.5," etc. may be met. "M" in the formula may be at least one selected from a group consisting of Mn and Al, for example. The range of "y" in the formula may have only an upper or lower limit or have upper and lower limits by selecting any one numeric value or any two numeric values from a group consisting of 1.6, 1.7, 1.8, 1.9, 2.0, 2.1, 2.2, 2.3, and 2.4, for example. The range may or may not be inclusive of its endpoints. For example, a relationship such as "1.6 ≤ y ≤ 2.4" may be met.

The layered compounds may include at least one selected from a group consisting of LiₓNiO_{y}, LiₓCoO_{y}, LiₓMnO_{y}, LiₓNi_{1/3}Co_{1/3}Mn_{1/3}O_{y}, LiₓNi_{0.4}Co_{0.3}Mn_{0.3}O_{y}, LiₓNi_{0.5}Co_{0.2}Mn_{0.3}O_{y}, LiₓNi_{0.5}Co_{0.3}Mn_{0.2}O_{y}, LiₓNi_{0.5}Co_{0.4}Mn_{0.1}O_{y}, LiₓNi_{0.5}Co_{0.1}Mn_{0.4}O_{y}, LiₓNi_{0.6}Co_{0.3}Mn_{0.1}O_{y}, LiₓNi_{0.6}Co_{0.2}Mn_{0.2}O_{y}, LiₓNi_{0.6}Co_{0.1}Mn_{0.3}O_{y}, LiₓNi_{0.7}Co_{0.2}Mn_{0.1}O_{y}, LiₓNi_{0.7}Co_{0.1}Mn_{0.2}O_{y}, LiₓNi_{0.8}Co_{0.1}Mn_{0.1}O_{y}, LiₓNi_{0.8}Co_{0.15}Al_{0.05}O_{y}, and LiₓNi_{0.9}Co_{0.05}Mn_{0.05}O_{y}, for example. For example, relationships such as "0.1 ≤ x ≤ 1.5," "1.6 ≤ y ≤ 2.4," etc. may be met in the respective formulas.

For example, the olivine-type compound may have a composition as given in general formula "LiMPO₄," where "M" may be at least one selected from a group consisting of Fe, Ni, Co, and Mn, for example.

The olivine-type compound may have a composition as given in a general formula "LiₓMn₁₋ₐFeₐPO_{y}", for example, where the range of "x" may have only an upper or lower limit or have upper and lower limits by selecting any one numeric value or any two numeric values from a group consisting of 0.1, 0.2, 0.3, 0.4, 0.5, 0.6, 0.7, 0.8, 0.9, 1.0, 1.1, 1.2, 1.3, 1.4, and 1.5, for example. The range may or may not be inclusive of its endpoints. For example, a relationship such as "0.1 ≤ x ≤ 1.5" may be met. The range of "a" in the formula may have only an upper or lower limit or have upper and lower limits by selecting any one numeric value or any two numeric values from a group consisting of 0, 0.1, 0.2, 0.3, 0.4, 0.5, 0.6, 0.7, 0.8, 0.9, and 1.0, for example. The range may or may not be inclusive of its endpoints. For example, relationships such as "0 ≤ a ≤ 1.0," "0.1 ≤ a ≤ 0.5," etc. may be met. The range of "y" in the formula may have only an upper or lower limit or have upper and lower limits by selecting any one numeric value or any two numeric values from a group consisting of 3.6, 3.7, 3.8, 3.9, 4.0, 4.1, 4.2, 4.3, and 4.4, for example. The range may or may not be inclusive of its endpoints. For example, a relationship such as "3.6 ≤ y ≤ 4.4" may be met.

The olivine-type compound may include at least one selected from a group consisting of LiₓMnPO_{y}, LiₓMn_{0.9}Fe_{0.1}PO_{y}, LiₓMn_{0.8}Fe_{0.2}PO_{y}, LiₓMn_{0.7}Fe_{0.3}PO_{y}, LiₓMn_{0.6}Fe_{0.4}PO_{y}, LiₓMn_{0.5}Fe_{0.5}PO_{y}, LiₓMn_{0.4}Fe_{0.6}PO_{y}, LiₓMn_{0.3}Fe_{0.7}PO_{y}, LiₓMn_{0.2}Fe_{0.8}PO_{y}, LiₓMn_{0.1}Fe_{0.9}PO_{y}, and LiₓFePO_{y}, for example. For example, relationships such as "0.1 ≤ x ≤ 1.5," "3.6 ≤ y ≤ 4.4," etc. may be met in the respective formulas.

Any dopant may be introduced into the positive active material. The dopant may be an interstitial dopant or a substitutional dopant. The dopant may include at least one selected from a group consisting of B, C, N, halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid, for example. A mass fraction (the level of doping) of the dopant may have only an upper or lower limit or have upper and lower limits by selecting any one numeric value or any two numeric values from a group consisting of 0.01%, 0.1%, 1%, 3%, and 5%, for example. The range may or may not be inclusive of its endpoints. The range of the doping may be, for example, from 0.01% to 5%.

### (Conductive Material)

The conductive material can form an electron conductive path within the electrode film. The conductive material may include at least one selected from a group consisting of acetylene black, Ketjen black (registered trademark), thermal black, furnace black, carbon fiber, carbon nanotube, graphene flakes, metal fiber, and metal powders, for example. If the electrode active material is a positive active material, the group of materials that can constitute the conductive material may further include natural graphite, artificial graphite, etc., for example.

The conductive material may be, for example, a powder. The conductive material may have small D50, as compared to the electrode active material. The range of D50 of the conductive material may have only an upper or lower limit or have upper and lower limits by selecting any one numeric value or any two numeric values from a group consisting of 0.01 µm, 0.05 µm, 0.1 µm, 0.5 µm, 1 µm, 3 µm, and 5 µm, for example. The range may or may not be inclusive of its endpoints. The range of D50 of the conductive material may be, for example, from 0.01 µm to 5 µm.

The range of the mass fraction of the conductive material in the electrode film may have only an upper or lower limit or have upper and lower limits by selecting any one numeric value or any two numeric values from a group consisting of 0%, 0.1%, 0.5%, 1%, 2%, 3%, 4%, 5%, 6%, 7%, 8%, 9%, and 10%, for example. The range may or may not be inclusive of its endpoints. For example, the range of the mass fraction of the conductive material may be from 0% to 10%.

### (Solid Electrolyte)

The solid electrolyte can form an ionic conductive path within the electrode film. The solid electrolyte may include at least one selected from a group consisting of a sulfide solid electrolyte, a halide solid electrolyte, an oxide solid electrolyte, a hydride solid electrolyte, and a nitride solid electrolyte, for example. The sulfide solid electrolyte may include at least one selected from a group consisting of an amorphous phase, a crystalline phase, and a glass-ceramic (a crystallized glass) phase. The crystalline phase may be of argyrodite type, LGPS type, etc., for example. The sulfide solid electrolyte may include at least one selected from a group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and Li₇PS₆, for example. For example, "LiI-LiBr-Li₃PS₄" indicates a sulfide solid electrolyte that is generated by mixing LiI, LiBr, and Li₃PS₄ in any mass ratio. For example, the sulfide solid electrolyte may be generated by a mechanochemical method. The mixing ratio may be identified by prefixing a number to each raw material. For example, "10LiI-15LiBr-75Li₃PS₄" indicates that the mixing ratio (the mass ratio) is "LiI:LiBr:Li₃PS₄ = 10: 15:75."

For example, the sulfide solid electrolyte may have a composition as given in general formula "yLiI-zLiBr-(100-y-z)[xLi₂S-(1-x)P₂S₅]," where the range of "x" may have only an upper or lower limit or have upper and lower limits by selecting any one numeric value or any two numeric values from a group consisting of 0.1, 0.2, 0.25, 0.3, 0.4, 0.5, 0.6, 0.7, 0.75, 0.8, and 0.9, for example. The range may or may not be inclusive of its endpoints. For example, a relationship such as "0.1 ≤ x ≤ 0.9" may be met. The relationship "0 < 100-y-z ≤ 100" is met in the formula. Insofar as this relationship is met, the ranges of "y" and "z" may, independently, have only an upper or lower limit or have upper and lower limits by selecting any one numeric value or any two numeric values from a group consisting of 0, 5, 10, 15, 20, 25, and 30, for example. The range may or may not be inclusive of its endpoints. For example, relationships such as "0 ≤ y ≤ 30," "0 ≤ z ≤ 30," etc. may be met.

For example, the sulfide solid electrolyte may have a composition as given in general formula "Li₄₋ₓM₁₋ₓPₓS₄," where the range of "x" may have only an upper or lower limit or have upper and lower limits by selecting any one numeric value or any two numeric values from a group consisting of 0, 0.1, 0.2, 0.3, 0.4, 0.5, 0.6, 0.7, 0.8, 0.9, and 1, for example. The range may or may not be inclusive of its endpoints. For example, a relationship such as "0 < x < 1" may be met. "M," in the formula, may include at least one selected from a group consisting of Al, Zn, In, Ge, Si, Sn, Sb, Ga, and Bi, for example.

For example, the sulfide solid electrolyte may have a composition as given in general formula "Li₁₀₊ₓGe₁₊ₓP₂₋ₓS₁₂," where the range of "x" may have only an upper or lower limit or have upper and lower limits by selecting any one numeric value or any two numeric values from a group consisting of 0, 0.1, 0.2, 0.3, 0.4, 0.5, 0.6, and 0.7, for example. The range may or may not be inclusive of its endpoints. For example, a relationship such as "0 < x ≤ 0.7" may be met. The sulfide solid electrolyte given in this formula may include an LGPS-type crystalline phase, for example.

For example, the halide solid electrolyte may have a composition as given in general formula "Li₆₋ₙₐMₐX₆," where "n" indicates an oxidation number of "M." "M" may include an atom having an oxidation number of +3, for example. "M," in the formula, may include an atom having an oxidation number of +4, for example. "M" may include at least one selected from a group consisting of Y, Al, Ti, Zr, Ca, and Mg, for example. For example, a relationship such as "0 < a < 2" may be met. "X," in the formula, may include at least one selected from a group consisting of F, Cl, Br, and I, for example.

The solid electrolyte may be, for example, a powder. The solid electrolyte may have small D50, as compared to the electrode active material. The range of D50 of the solid electrolyte may have only an upper or lower limit or have upper and lower limits by selecting any one numeric value or any two numeric values from a group consisting of 0.01 µm, 0.05 µm, 0.1 µm, 0.5 µm, 1 µm, 3 µm, and 5 µm, for example. The range may or may not be inclusive of its endpoints. The range of D50 of the solid electrolyte may be, for example, from 0.01 µm to 5 µm.

The range of the volume fraction of the solid electrolyte in the electrode film may have only an upper or lower limit or have upper and lower limits by selecting any one numeric value or any two numeric values from a group consisting of 0%, 1%, 5%, 10%, 20%, 30%, 40%, 50%, 60%, and 70%, for example. The range may or may not be inclusive of its endpoints. For example, the range of the volume fraction of the solid electrolyte may be from 0% to 70%.

### (First Binder)

The first binder includes a fibrous binder. The first binder may be, substantially, formed of a fibrous binder. For example, the fibrous binder may be a particulate binder (an aggregate) fiberized (fibrillated) by having a shear force or the like applied thereto. For example, as a mixture, including a particulate binder to be a fibrous binder and an electrode active material, passes through a roll gap, a shear force can be applied to the particulate binder. As the particulate binder turns into a fibrous binder, an electrode film can be deposited on the fibrous binder. The roll processing may be performed once or repeated multiple times. Prior to the roll processing, a shear force may be applied to the mixture by a jet mill, a stirring granulator, etc., for example. For example, in addition to the application of shear force, the mixture may be heated at a temperature in a range from 30°C to 150°C to promote the fibrillation of the particulate binder. The particulate binder may be fully or partially fibrillated. In other others, the first binder may contain particulate components too.

The "fibrous" indicates that the aspect ratio (a ratio of the major axial diameter to the minor axial diameter) is 10 or greater. Materials whose aspect ratio is less than 10 are regarded as being "particulate." A fibrous material may have an aspect ratio (a ratio of the fiber length to the fiber diameter) of 100 or greater, for example. The minor axial diameter, the major axial diameter, the fiber diameter, and the fiber length are measured by microscopy. An arithmetic mean of ten fibrous materials to be measured is employed as the aspect ratio. The short-side length and the long-side length of a minimum bounding rectangle "MBR" of the fibrous materials to be measured are regarded as the minor axial diameter and the major axial diameter, respectively. The fiber diameter indicates a dimension of a fibrous material to be measured in a direction orthogonal to the axial direction of the fibrous material to be measured. The fiber length indicates the entire length, in the axial direction, of the fibrous material to be measured.

The fibrous binder includes, for example, a polymer composition. The polymer composition may be a homopolymer, a copolymer, a polymer blend, or a polymer alloy. The fibrous binder may include, for example, polytetrafluorethylene (PTFE) or the like. In addition to PTFE, the fibrous binder may include an additional component. The additional component may include at least one selected from a group consisting of polyolefin, cellulose, polyether, and polysiloxane, for example. The additional component and the PTFE may form at least one selected from a group consisting of a polymer blend, a polymer alloy, and a copolymer. The range of the mass fraction of PTFE or the range of the mass fraction of tetrafluoroethylene (TFE)-derived component to the fibrous binder may have only an upper or lower limit or have upper and lower limits by selecting any one numeric value or any two numeric values from a group consisting of 0%, 10%, 20%, 30%, 40%, 50%, 60%, 70%, 80%, 90%, 95%, 99%, and 100%, for example. The range may or may not be inclusive of its endpoints. The range of the mass fraction of PTFE to the fibrous binder may be, for example, from 0% to 100%.

The range of a number-average molecular weight "Mn" of polymers constituting the fibrous binder may have only an upper or lower limit or have upper and lower limits by selecting any one numeric value or any two numeric values from a group consisting of 10 × 10⁴, 50 × 10⁴, 100 × 10⁴, 150 × 10⁴, 200 × 10⁴, 300 × 10⁴, 400 × 10⁴, 500 × 10⁴, 1000 × 10⁴, 2000 × 10⁴, and 3000 × 10⁴, for example. The range may or may not be inclusive of its endpoints. The range of the number-average molecular weight may be, for example, from 10 × 10⁴ to 3000 × 10⁴. The number-average molecular weight may be determined from a standard specific gravity, for example. A measurement specimen is prepared in conformity with "ASTM D-4895 98." The standard specific gravity is measured by a water displacement method in conformity with "ASTM D-792."

The range of the fiber diameter of the fibrous binder may have only an upper or lower limit or have upper and lower limits by selecting any one numeric value or any two numeric values from a group consisting of 1 nm, 5 nm, 10 nm, 15 nm, 20 nm, 50 nm, 100 nm, 200 nm, 500 nm, and 1000 nm, for example. The range may or may not be inclusive of its endpoints. The range of the fiber diameter may be, for example, from 1 nm to 1000 nm.

The fibrous binder can form a fiber matrix. For example, the film profile of an electrode film may be maintained by the fiber matrix holding an electrode active material (a powder). The fiber matrix may be evaluated by fiber density, for example. For example, the fiber density can be measured by the following method. A cross-sectional SEM image of an electrode film is prepared. A linear line of 20 µm is set at any position in the cross-sectional SEM image. Fibrous portions intersecting the linear line are counted, thereby determining the fiber density [unit: linear line/20 µm]. The fiber density is measured at three or more positions in the cross-sectional SEM image. An arithmetic mean of the three or more positions is employed as the fiber density. The range of the fiber density may have only an upper or lower limit or have upper and lower limits by selecting any one numeric value or any two numeric values from a group consisting of 1, 2, 5, 10, 20, 40, 60, 80, and 100, for example. The range may or may not be inclusive of its endpoints. The range of the fiber density may be, for example, from 1 to 100.

The range of the mass fraction of the first binder in the electrode film may have only an upper or lower limit or have upper and lower limits by selecting any one numeric value or any two numeric values from a group consisting of 0.1%, 0.5%, 1%, 2%, 3%, 4%, 5%, 6%, 7%, 8%, 9%, and 10%, for example. The range may or may not be inclusive of its endpoints. The range of the mass fraction of the first binder in the electrode film may be, for example, from 0.1% to 10%.

### (Second Binder)

The second binder can take any form. The second binder may take a form of particles, a film, fibers, etc., for example. For example, the second binder may have a stronger cohesive ability than the first binder. For example, an electrode film may be affixed to a current collector by the second binder. The second binder may include at least one selected from a group consisting of polyvinylidene fluoride (PVdF), vinylidene fluoride-co-hexafluoropropylene (PVdF-HFP), carboxymethyl cellulose (CMC), polyacrylic acid (PAA), polyvinyl alcohol (PVA), polyvinylpyrrolidone (PVP), polyethylene oxide (PEO), styrene-butadiene rubber (SBR), acrylonitrile-butadiene rubber (NBR), polyethylene (PE), polypropylene (PP), polyacrylonitrile (PAN), polyoxyethylene alkyl ether, polyimide (PI), polyamide imide (PAI), and derivatives thereof, for example.

The range of the mass fraction of the second binder in the electrode film may have only an upper or lower limit or have upper and lower limits by selecting any one numeric value or any two numeric values from a group consisting of 0%, 0.1%, 0.5%, 1%, 2%, 3%, 4%, 5%, 6%, 7%, 8%, 9%, and 10%, for example. The range may or may not be inclusive of its endpoints. The range of the mass fraction of the second binder in the electrode film may be, for example, from 0% to 10%.

A mass ratio "First Binder: Second Binder" may be, for example, in a range whose endpoints are defined by any two sets selected from a group consisting of "1:9," "2:8," "3:7," "4:6," "5:5," "6:4," "7:3," "8:2," "9:1," and "10:0." For example, a relationship such as a mass ratio "First Binder: Second Binder = 1:9 to 10:0" may be met.

### (Additional Components)

The electrode film may include any additional components. The additional components include, for example, an inorganic filler, an organic filler, a surface modification agent, a dispersant, a lubricant, a flame retardant, a protectant, flux, a coupling agent, an adsorbent, etc. The additional component may include, for example, polyoxyethylene allylphenyl ether phosphate, zeolite, a silane coupling agent, molybdenum sulfide, tungsten oxide, etc.

### (Summary)

As described above, in the present embodiment, the density of a first mixture layer disposed on the first primary surface of a current collector of each of positive plate 10 and negative plate 20 is lower than the density of a second mixture layer disposed on the second primary surface of the current collector.

In general, in the wound electrode assembly, the first primary surface facing inward has a greater stress than the second primary surface facing outward. In the present embodiment, the density of the first mixture layer of each of the positive plate 10 and the negative plate 20 disposed on the first primary surface whose stress is greater than the second primary surface facing outward is lower than the density of the second mixture layer disposed on the second primary surface as described above, thereby imparting flexibility to the wound electrode assembly. This can reduce cracks in the mixture layer of each of the positive plate 10 and the negative plate 20.

Note that, in the present embodiment, the density of a first mixture layer disposed on the first primary surface of a current collector of each of the positive plate 10 and the negative plate 20 is lower than the density of a second mixture layer disposed on the second primary surface of the current collector. However, the present disclosure is not limited thereto.

The density of the first mixture layer disposed on the first primary surface of the current collector of at least one of positive plate 10 and negative plate 20 may be lower than the density of the second mixture layer disposed on the second primary surface of the current collector. In this case also, the flexibility can be imparted to wound electrode assembly 1, thereby reducing cracks in the mixture layer of the at least one of positive plate 10 and negative plate 20. In this case, the first mixture layer disposed on the first primary surface of a current collector of the other one of positive plate 10 and negative plate 20 and the second mixture layer disposed on the second primary surface of the current collector may have the same density.

Furthermore, in the present embodiment, setting the second mixture layer to have a density 1.1 times or greater and 1.5 times or less than the first mixture layer allows moderate flexibility to be imparted to the wound electrode assembly. For example, if the second mixture layer has a density 1.5 times the first mixture layer, the wound electrode assembly has enhanced rigidity, making the winding difficult. If the second mixture layer has a density 1.1 times less than the first mixture layer, on the other hand, the first surface and the second surface have a small difference in density, making it difficult to impart sufficient flexibility to the wound electrode assembly.

Moreover, as described above, the densities of the respective regions increase from the inner side to the outer side in the winding direction, thereby lowering the density of a mixture in a region greatly subjected to a stress. This can reduce cracks in the mixture layer.

### (Other Variations)

Note that, in the present embodiment, first cathode film 13 and second cathode film 14 each have three regions in the winding direction. However, the present disclosure is not limited thereto. First cathode film 13 and second cathode film 14 each may have only first region R1 located on the inner peripheral end side of the winding, and second region R2 located on the outer peripheral end side of the winding. In this case, first region R1 may have a lower density than second region R2 in at least one mixture layer between first cathode film 13 and second cathode film 14.

Moreover, first cathode film 13 and second cathode film 14 each may have four or more regions in the winding direction. In this case, the densities of multiple regions of the cathode film of at least one of first cathode film 13 and second cathode film 14 may increase from the inner peripheral end side of the winding to the outer peripheral end side of the winding.

Note that the number of regions of each of first anode film 23 and second anode film 24 in the winding direction and the densities of the respective regions can be appropriately set as described above, as with first cathode film 13 and second cathode film 14.

In the above description, both first cathode film 13 and second cathode film 14 are configured of a free-standing film. However, the present disclosure is not limited thereto. One of first cathode film 13 and second cathode film 14 may be configured of a free-standing film.

Moreover, in the above description, the cathode film is disposed on opposing surfaces of positive current collector 11. However, the present disclosure is not limited thereto. The cathode film may be disposed on one surface of positive current collector 11 and the cathode mixture layer may be disposed on the other surface of positive current collector 11. In this case, the cathode mixture layer may be formed by positive current collector 11 being coated with slurry as is conventional.

Similarly, both first anode film 23 and second anode film 24 are configured of a free-standing film. However, the present disclosure is not limited thereto. One of first anode film 23 and second anode film 24 may be configured of a free-standing film.

Moreover, in the above description, the anode film is disposed on opposing surfaces of negative current collector 21. However, the present disclosure is not limited thereto. The negative may be disposed on one surface of negative current collector 21 and the anode mixture layer may be disposed on the other surface of negative current collector 21. In this case, the anode mixture layer may be formed by negative current collector 21 being coated with slurry as is conventional.

Moreover, at least one of positive current collector 11 and negative current collector 21 may have a wavy shape meandering in the winding direction.

Moreover, either one of positive plate 10 and negative plate 20 may be formed by the current collector being coated with slurry.

### (Appended Note)

As described above, the present embodiment includes disclosure as follows:

### [Configuration 1]

A wound electrode assembly including:
a current collector having a first primary surface located on one end side of the current collector in a direction of thickness of the current collector and a second primary surface located on the other end side of the current collector in the direction of thickness;
a first electrode film disposed on the first primary surface; and
a second electrode film disposed on the second primary surface, wherein
the current collector is wound in a manner that the first primary surface is facing inward and the second primary surface is facing outward, and
the first electrode film has a lower density than the second electrode film.

### [Configuration 2]

The wound electrode assembly according to Configuration 1, wherein at least one electrode film of the first electrode film and the second electrode film is configured of a free-standing film, and
the at least one electrode film includes active material powders and a fibrillated binder.

### [Configuration 3]

The wound electrode assembly according to Configuration 1 or 2, wherein
the second electrode film has a density 1.1 times or greater and 1.5 times or less than the first electrode film.

### [Configuration 4]

The wound electrode assembly (1) according to any one of Configurations 1 to 3, wherein
the first electrode film and the second electrode film each include a plurality of regions along a winding direction of the current collector, and
densities of the plurality of regions of at least one electrode film of the first electrode film and the second electrode film increase from an inner peripheral side of the winding direction to an outer peripheral side of the winding direction.

### [Configuration 5]

The wound electrode assembly according to Configuration 4, wherein
the first electrode film and the second electrode film each have, in the winding direction, a first region located on an inner peripheral end side of winding and a second region located on the outer peripheral end side of winding, and
the first region of the at least one electrode film has a higher density than the second region of the at least one electrode film.

### [Configuration 6]

The wound electrode assembly according to Configuration 5, wherein
the first electrode film and the second electrode film each have an intermediate region between the first region and the second region in the winding direction, and
the at least one electrode film has increasing densities in order from the first region to the intermediate region to the second region.

### [Configuration 7]

A secondary battery comprising:
the wound electrode assembly according to any one of Configurations 1 to 6; and
a housing case accommodating the wound electrode assembly.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

## Claims

1. A wound electrode assembly (1) comprising:
a current collector (11) having a first primary surface (11a) located on one end side of the current collector (11) in a direction of thickness of the current collector (11) and a second primary surface (11b) located on the other end side of the current collector (11) in the direction of thickness;
a first electrode film (13) disposed on the first primary surface (11a); and
a second electrode film (14) disposed on the second primary surface (11b), wherein
the current collector is wound in a manner that the first primary surface (11a) is facing inward and the second primary surface (11b) is facing outward, and
the first electrode film (13) has a lower density than the second electrode film (14).

2. The wound electrode assembly (1) according to claim 1, wherein at least one electrode film of the first electrode film (13) and the second electrode film (14) is configured of a free-standing film, and
the at least one electrode film includes active material powders and a fibrillated binder.

3. The wound electrode assembly (1) according to claim 1 or 2, wherein
the second electrode film (14) has a density 1.1 times or greater and 1.5 times or less than the first electrode film (13).

4. The wound electrode assembly (1) according to any one of claims 1 to 3, wherein
the first electrode film (13) and the second electrode film (14) each include a plurality of regions along a winding direction of the current collector, and
densities of the plurality of regions of at least one electrode film of the first electrode film (13) and the second electrode film (14) increase from an inner peripheral side of the winding direction to an outer peripheral side of the winding direction.

5. The wound electrode assembly (1) according to claim 4, wherein
the first electrode film (13) and the second electrode film (14) each have, in the winding direction, a first region (R1) located on an inner peripheral end side of winding and a second region (R2) located on the outer peripheral end side of winding, and
the first region (R1) of the at least one electrode film has a higher density than the second region (R2) of the at least one electrode film.

6. The wound electrode assembly (1) according to claim 5, wherein
the first electrode film (13) and the second electrode film each have an intermediate region (R3) between the first region (R1) and the second region (R2) in the winding direction, and
the at least one electrode film has increasing densities in order from the first region (R1) to the intermediate region (R3) to the second region (R2).

7. A secondary battery (100) comprising:
the wound electrode assembly (1) according to any one of claims 1 to 6; and
a housing case (2) accommodating the wound electrode assembly (1).
